# EUROPÄISCHE PATENTANMELDUNG

(11) **EP 1 190 619 A1**
(43) Veröffentlichungstag der Anmeldung: **27.03.2002**
(21) Anmeldenummer: 00120909.7
(22) Anmeldetag: 26.09.2000
(51) Int. Cl.: A01G 9/10

(54) **Anzuchtbehälter**

(71) Anmelder: Bachmann forming AG, 6280 Hochdorf (CH)
(72) Erfinder: Bachmann, Reto, 6280 Hochdorf (CH)
(74) Vertreter: Fuchs Mehler Weiss & Fritzsche

(57) **Zusammenfassung**

Es wird ein Anzuchtbehälter (1) beschrieben, bei dem die Beschädigungen der Pflanzzwiebeln verringert werden und aus dem die Pflanzzwiebeln (5) leichter entnommen werden können. Der Anzuchtbehälter (1) ist aus Kunststoff und weist eine Boden- und eine Umfangswand (3,2) sowie mehrere Aufnahmeräume (7) für Pflanzzwiebeln (5) auf, wobei jeder Aufnahmeraum von vier auf einem Viereck angeordneten Stützelementen (10) begrenzt wird, die sich von der Bodenwand (3) nach oben erstrecken. Die Stützelemente (10) sind zur Ausbildung eines sich nach oben erweiternden Aufnahmeraums geneigt angeordnet. Die Stützelemente (10) benachbarter Aufnahmeräume können jeweils über Verbindungswände miteinander verbunden sein.

## Beschreibung

Die Erfindung betrifft einen Anzuchtbehälter aus Kunststoff mit einer Bodenund einer Umfangswand sowie mit mehreren Aufnahmeräumen für Pflanzzwiebeln, wobei jeder Aufnahmeraum von vier auf einem Viereck angeordneten Stützelementen begrenzt wird, die sich von der Bodenwand nach oben erstrecken.

Zur Anzucht von Schnittblumen werden die Blumenzwiebeln auf Wasserkulturen gehalten, wozu eine Wasserschale mit eingelegtem Styroportray verwendet wird. Dieser Styroporeinsatz besitzt im wesentlichen zylindrische Aufnahmen für die Zwiebeln und liegt nicht überall vollständig auf der Bodenwand der Schale auf. Dies hat zur Folge, daß die sich ausbildenden Wurzeln unter den Styroporeinsatz greifen, so daß die Zwiebeln nicht mehr ohne Verletzung des Wurzelwerks herausgenommen werden können.

Aus der DE 34 27 704 A1 ist ein Behälter zum Füllen mit im wesentlichen zylindrischen Pflanzlingen bekannt, der eine Vielzahl von Aufnahmen aufweist. Um die Pflanzlinge in den Aufnahmen zu halten, sind Stützelemente an den Kreuzungspunkten der Trennwände angeordnet, und zwar so, daß sie in Richtung der Diagonalen weisen, sich also in jeder Aufnahme zwei mal zwei Stützelemente diametral gegenüberstehen. In jeder Aufnahme ist ein Wurzelraum in Form einer im Boden befindlichen Vertiefung vorhanden, der eine Entfaltung der Wurzeln der Pflanzlinge zuläßt.

Sämtliche Aufnahmen stehen miteinander in Verbindung, so daß sich ein gleichmäßiges Flüssigkeitsniveau über alle Aufnahmen des Behälters ausbilden kann.

Dieser Behälter hat mehrere Nachteile. Die Stege erstrecken sich senkrecht nach oben, so daß keine Anpassung an unterschiedlich dicke Zwiebeln möglich ist. Wenn die Zwiebeln wachsen und dicker werden, werden diese beschädigt, weil kein individueller Raum zur Verfügung steht. Die Zwiebeln klemmen zwischen den Stegen fest und werden dadurch beschädigt, insbesondere auch deswegen, weil die Stege aus Styropor bestehen und entsprechend unnachgiebig ausgebildet sind. Dadurch können die Zwiebeln auch nicht auf einfache Weise aus den Aufnahmeräumen entfernt werden.

Es ist daher Aufgabe der Erfindung, einen Anzuchtbehälter bereitzustellen, bei dem die Beschädigungen der Pflanzzwiebeln verringert werden und aus dem die Pflanzzwiebeln leichter entnommen werden können.

Diese Aufgabe wird dadurch gelöst, daß die Stützelemente zur Ausbildung eines sich nach oben erweiternden Aufnahmeraums geneigt angeordnet sind.

Durch die Neigung der Stützelemente wird ein konischer oder pyramidenstumpfförmiger Aufnahmeraum definiert, so daß die Pflanzzwiebeln entsprechend ihrem Durchmesser positioniert werden können. Da der Aufnahmeraum außerhalb den Stützelementen keine seitlichen Wände aufweist, liegen die Pflanzzwiebeln ausschließlich an den Stützelementen an. Beim Wachsen der Pflanzzwiebeln können sich diese mit zunehmendem Durchmesser innerhalb der sich nach oben erweiternden Aufnahmeräume bewegen. Der Vorteil besteht darin, daß nur eine geringe Klemmwirkung auf die Pflanzzwiebeln ausgeübt wird, so daß diese nicht beschädigt werden und dadurch auch auf einfache Weise aus dem Anzuchtbehälter entnommen werden können.

Der Anzuchtbehälter wird mit Wasser bis zu einer vorgegebenen Höhe gefüllt, wobei sich überall ein gleichmäßiges Flüssigkeitsniveau ausbildet, weil die Aufnahmeräume untereinander in Verbindung stehen.

Die Stützelemente können unterschiedlich ausgebildet sein und sind beispielsweise als sich nach oben erstreckende Leisten, Stege oder Rippen ausgeführt.

Vorzugsweise sind die Stützelemente benachbarter Aufnahmeräume jeweils über eine Verbindungswand miteinander verbunden. Die Verbindungswand hat hauptsächlich die Aufgabe, die Stützelemente gegeneinander zu stabilisieren.

Vorzugsweise ist die Verbindungswand konkav gewölbt ausgebildet. Die Wölbung der Verbindungswand begünstigt eine gewisse Nachgiebigkeit der Stützelemente, so daß eine federnde und damit schonende Klemmung der Pflanzzwiebeln erreicht wird.

Vorzugsweise weisen die Stützelemente eine Auflageschulter auf, auf der die Pflanzzwiebel aufliegen kann, was insbesondere dann von Vorteil ist, wenn es sich um gleichdicke Pflanzzwiebeln handelt. Auf diese Weise haben sämtliche Pflanzzwiebeln den gleichen Abstand von der Bodenwand des Anzuchtbehälters, so daß für alle Pflanzzwiebeln der gleiche Wurzelraum zur Verfügung steht.

Die Auflageschultern haben den weiteren Vorteil, daß die Pflanzzwiebeln innerhalb der Aufnahmeräume nicht verrutschen insbesondere kippen können. Die Pflanzzwiebeln werden dadurch besser stabilisiert.

Vorzugsweise ist die Auflageschulter in der oberen Hälfte des Stützelementes angeordnet.

Die Neigung des oberhalb der Auflageschulter befindlichen oberen Stützelementabschnitts ist kleiner gleich der Neigung des unterhalb der Auflageschulter befindlichen unteren Stützelementabschnitts. Welche Neigung gewählt wird, hängt im wesentlichen von der Form der Pflanzzwiebeln ab. Wenn sehr bauchige Pflanzzwiebeln eingesetzt werden, empfiehlt es sich, die Neigung des oberen Stützelementabschnittes nur geringfügig geringer zu wählen als die Neigung des unteren Stützelementabschnittes. Bei schlanken, eher länglich ausgeblildeten Pflanzzwiebeln kann der obere Stützelementabschnitt eine deutlich andere Neigung aufweisen.

Vorzugsweise ist der obere Stützelementabschnitt senkrecht angeordnet.

Vorteilhafterweise bilden jeweils vier im Innern des Behälters angeordnete Stützelemente zusammen mit den Verbindungswänden eine Säule. Vorteilhafterweise weist die Säule eine Deckwand auf. Dadurch wird die Säule stabilisiert, wobei gleichzeitig aufgrund der gewölbten Verbindungswände eine gewisse Nachgiebigkeit der Stützelemente, die die vier Ecken der Säule bilden, gewährleistet wird.

Vorzugsweise geht die Deckwand über eine schräg angeordnete Übergangswand in die Verbindungswand über. Diese schräg verlaufende Übergangswand erleichtert das Einführen der Pflanzzwiebeln in den Aufnahmeraum, wobei eine Beschädigung der Außenhaut der Pflanzzwiebel weitgehend verhindert wird.

Vorzugsweise weisen mindestens die durch Säulen begrenzten Aufnahmeräume eine in die Bodenwand eingeformte napfförmige Vertiefung auf. Diese napfförmige Vertiefung hat den Vorteil, daß sich vorzugsweise in diesem Bereich das Wurzelwerk ansammelt, so daß eine Verfilzung mit den Wurzeln benachbarter Pflanzzwiebeln verhindert wird. Vorzugsweise wird diese napfförmige Vertiefung durch Stege gebildet, die sich zwischen den Verbindungswänden erstrecken.

Die Höhe der Säulen beträgt etwa 75 bis 100 % der Höhe der Umfangswand des Behälters.

Vorteilhafterweise besteht der Behälter aus tiefgezogener Kunststofffolie. Bei dieser Ausgestaltung sind die Säulen hohl, wodurch eine besonders vorteilhafte Nachgiebigkeit der Säulen erzielt wird. Über die Wandstärke kann ebenfalls die Elastizität eingestellt werden. Der Behälter ist insgesamt leicht und durch die spezielle Ausgestaltung der Stützelemente trotzdem stabil.

Beispielhafte Ausführungsformen der Erfindung werden nachfolgend anhand der Zeichnungen näher erläutert.

### Es zeigen:

- Fig. 1: eine perspektivische Darstellung des Anzuchtbehälters,
- Fig. 2: eine Draufsicht auf den in Fig. 1 gezeigten Anzuchtbehälter,
- Fig. 3: die Seitenansicht zweier Säulen,
- Fig, 4: die Draufsicht auf einen der in Fig. 3 gezeigten Säulen,
- Fig. 5: eine vergrößerte Draufsicht eines Ausschnitts aus dem in Fig. 1 gezeigten Anzuchtbehälter mit eingesetzten Pflanzzwiebeln,
- Fig. 6: einen Schnitt längs der Linie VI-VI des in Fig. 5 gezeigten Anzuchtbehälters, und

- Fig. 7: eine Draufsicht auf einen Ausschnitt eines Anzuchtbehälters gemäß einer weiteren Ausführungsform.

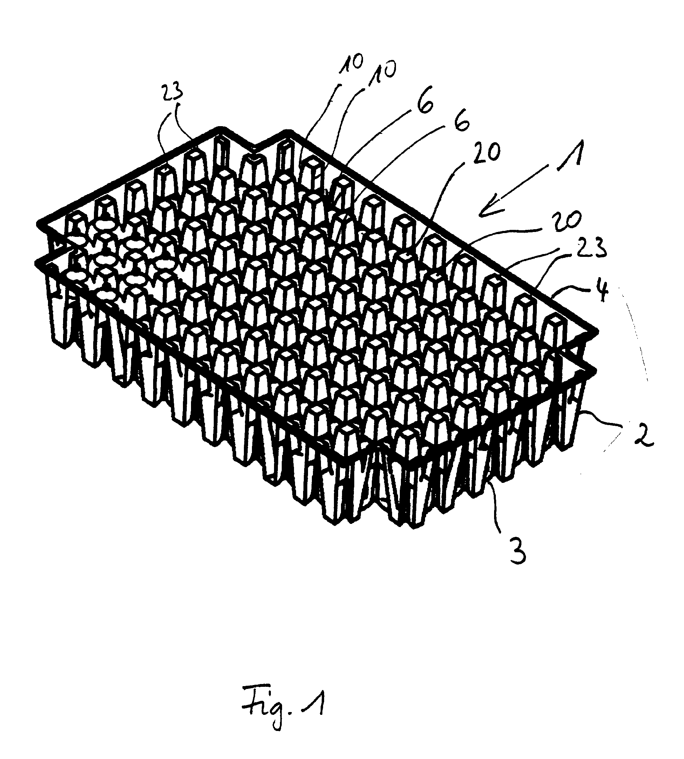

In der Fig. 1 ist ein im wesentlichen rechteckiger Anzuchtbehälter 1 dargestellt, der eine umlaufende Umfangswand 2 und eine Bodenwand 3 aufweist. Im Innern des Anzuchtbehälters 1 sind eine Vielzahl von Aufnahmen 6 in regelmäßigen Reihen angeordnet. Diese Aufnahmen 6 werden von Stützelementen 10 begrenzt, die die Kanten von Säulen 20 bilden, deren Ausgestaltung und Anordnung im Zusammenhang mit den nachfolgenden Figuren eingehender beschrieben wird.

Die Umfangswand 2 ist nach außen geneigt ausgebildet und wird von einem nach außen weisenden Rand 4 begrenzt. Die Umfangswand 2 weist eine Strukturierung auf, die durch die Säulenstruktur vorgegeben ist. In die Umfangswand 2 sind Halbsäulen 23 eingeformt. Alle Säulen 20,23 weisen dieselbe Höhe auf, die im hier gezeigten Ausführungsbeispiel etwas geringer ist als die Höhe der Umfangswand 2 und etwa 95 % dieser Höhe beträgt.

Der dargestellte Anzuchtbehälter 1 besteht aus Kunststoff und ist im Tiefziehverfahren hergestellt.

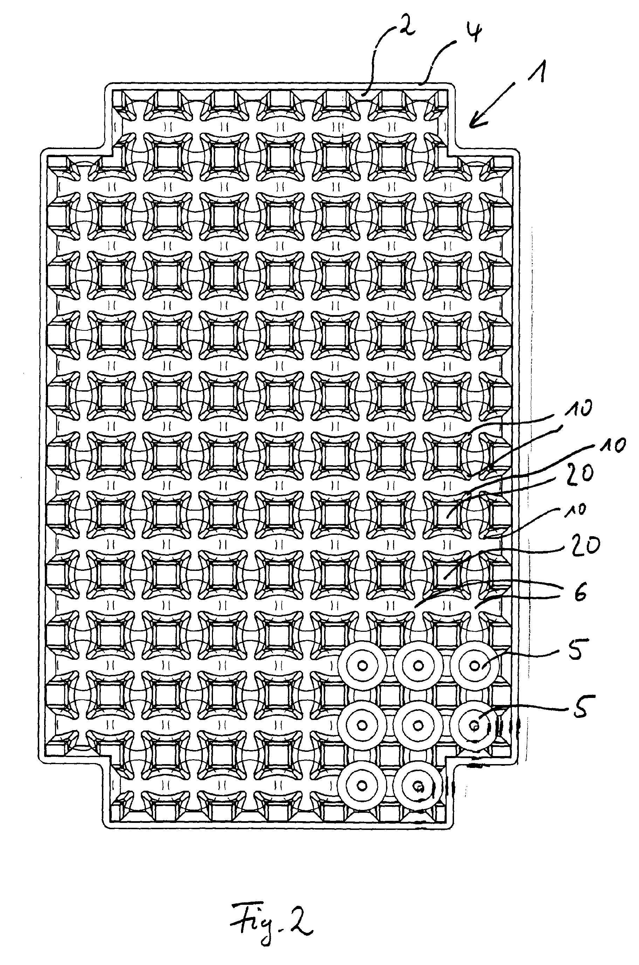

In der Fig. 2 ist die Draufsicht auf den in Fig. 1 gezeigten Anzuchtbehälter dargestellt. Im unteren Bereich sind Pflanzzwiebeln 5 als konzentrische Kreise schematisch dargestellt. Die Aufnahmen 6 werden von insgesamt vier Stützelementen 10 begrenzt, die Bestandteile der Säulen 20 sind.

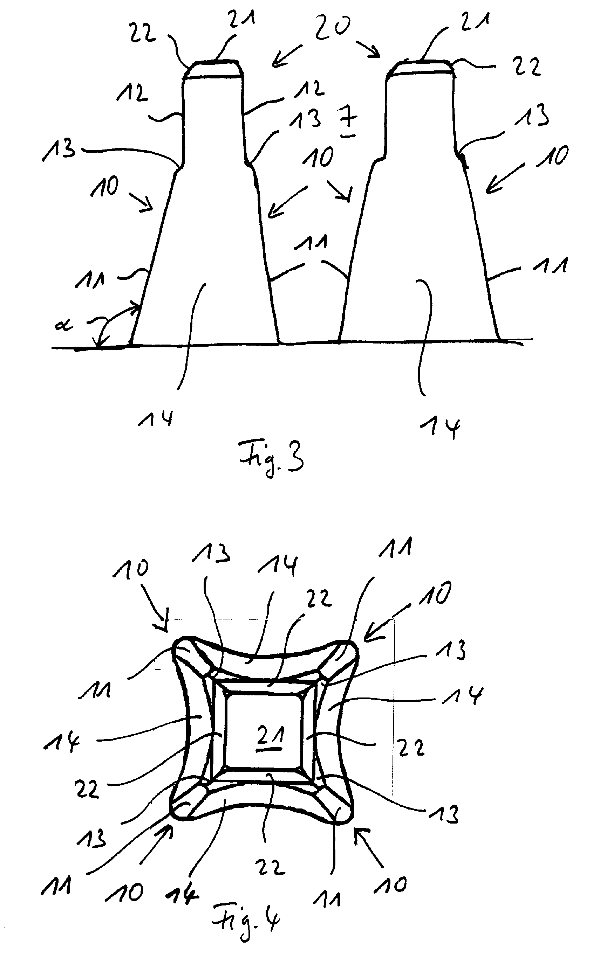

In der Fig. 3 sind zwei Säulen 20 in Seitenansicht dargestellt. Die Kanten oder Ecken der Säulen 20 werden durch die Stützelemente 10 gebildet, die sich in einen unteren Stützelementabschnitt 11 und einen oberen Stützelementabschnitt 12 unterteilen. Zwischen den beiden Abschnitten 11 und 12 ist eine Auflageschulter 13 vorgesehen. Die Neigung der Stützelemente 10 ist so gewählt, daß ein sich nach oben erweiternder Aufnahmeraum 7 gebildet wird. Hierbei ist die Neigung des unteren Stützelementabschnitts 11 größer gewählt als die des oberen Stützelementabschnitts 12, der in der hier gezeigten Ausführungsform senkrecht angeordnet ist. Die Neigung wird durch den Neigungswinkel α angegeben.

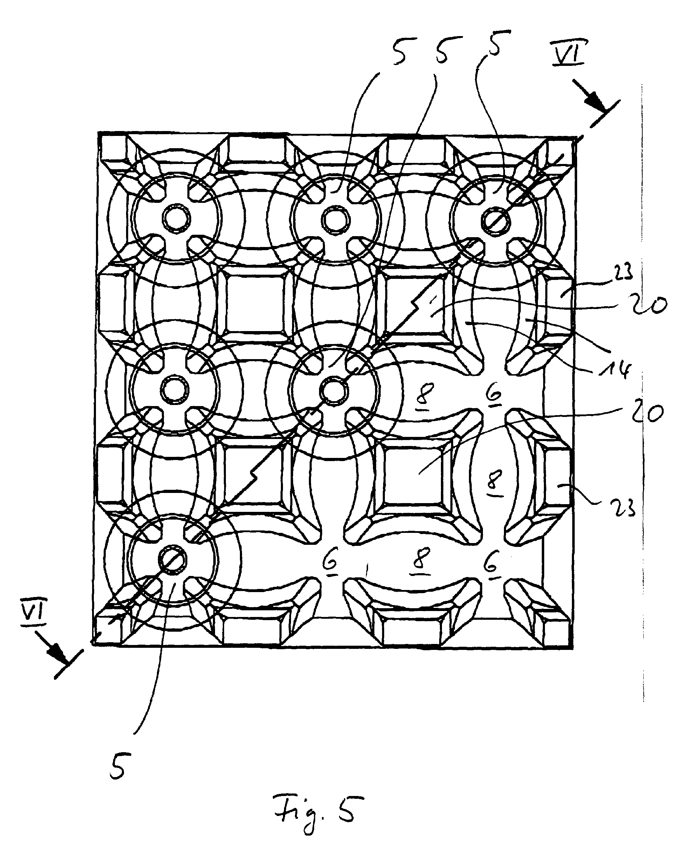

Zwischen den Stützelementen 10 erstreckt sich eine Verbindungswand 14, die - wie in der Fig. 4 zu sehen ist - konkav nach innen gewölbt ist. Die nach innen gewölbte konkave Verbindungswand 14 kann in das Innere der Säule ausweichen, wenn die Stützelemente 10 geringfügig nach innen gedrückt werden, wenn die Pflanzzwiebel in den Aufnahmeraum 7 eingesetzt wird.

Nach oben geht die Verbindungswand 14 in eine Übergangswand 22 und in eine Deckwand 21 über. Wie in der Fig. 4 dargestellt ist, gibt es entsprechend der vier Verbindungswände 14 auch vier Übergangswände 22, die derart geneigt angeordnet sind, daß das Einführen der Pflanzzwiebeln in die Aufnahmeräume 7 problemlos durchgeführt werden kann. Die Deckwand 21 ist horizontal angeordnet und erhöht die Stabilität der Stützelemente 10 und somit der gesamten Säule 20.

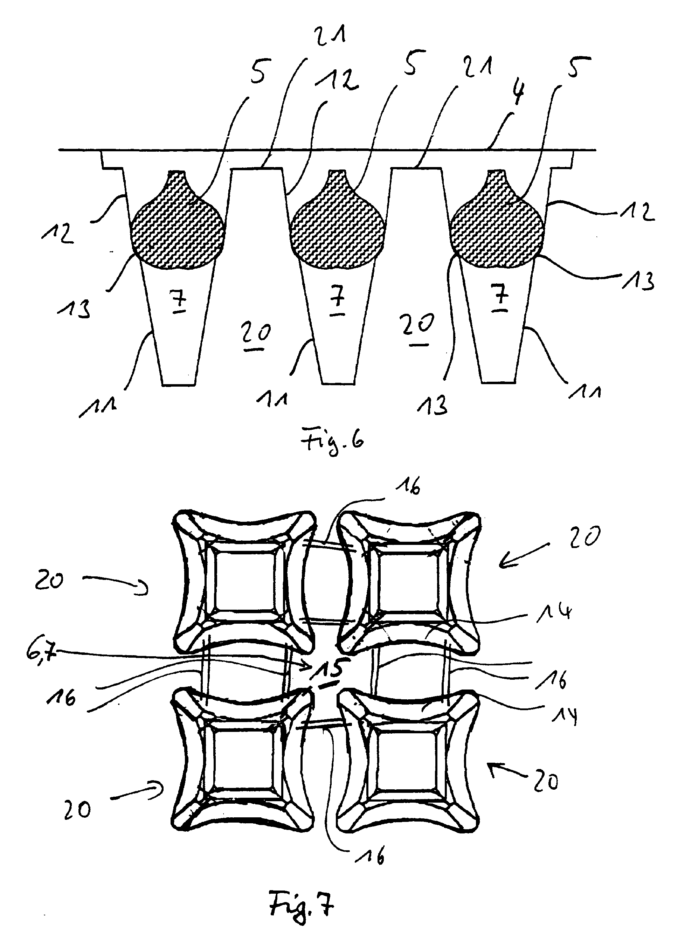

In der Fig. 5 ist ein Ausschnitt in Draufsicht eines Anzuchtbehälters 1 dargestellt, wobei die Pflanzzwiebeln 5 als konzentrische Kreise eingezeichnet sind. Die Aufnahmen 6 bzw. die Aufnahmeräume 7 stehen über die Verbindungsräume 8 zwischen den Säulen 20,23 miteinander in Verbindung, so daß sich das eingefüllte Wasser gleichmäßig im Anzuchtbehälter 1 verteilen kann. Durch die konkav eingezogenen Verbindungswände 14 wird ein in Draufsicht ovaler Verbindungsraum 8 geschaffen.

Zur Verdeutlichung der Anordnung der Pflanzzwiebeln 5 ist in der Fig. 6 ein Schnitt längs der Linie VI-VI durch die in Fig. 5 gezeigte Anordnung dargestellt. Es handelt sich bei den Pflanzzwiebeln 5 um äußerst bauchige Zwiebeln, die auf den Auflageschultern 13 aufliegen. Für die Ausbildung der Wurzeln steht der darunterliegende Aufnahmeraum 7 zur Verfügung.

In der Fig. 7 ist eine weitere Ausführungsform dargestellt, bei der sich im Aufnahmeraum 7 im unteren Bereich eine napfförmige Vertiefung 15 befindet, die durch Stege 16 begrenzt wird, die sich zwischen den Verbindungswänden 14 erstrecken. Diese napfförmige Vertiefung bietet den Vorteil, daß sich das nach unten ausdehnende Wurzelwerk im Bereich des Aufnahmeraumes 7 zurückgehalten wird und somit keine Verfilzung mit den Wurzeln benachbarter Pflanzzwiebeln einstellen kann.

### Bezugszeichen

- 1: Anzuchtbehälter
- 2: Umfangswand
- 3: Bodenwand
- 4: Rand
- 5: Pflanzzwiebel
- 6: Aufnahme
- 7: Aufnahmeraum
- 8: Verbindungsraum
- 10: Stützelement
- 11: unterer Stützelementabschnitt
- 12: oberer Stützelementabschnitt
- 13: Auflageschulter
- 14: Verbindungswand
- 15: napfförmige Vertiefung
- 16: Steg
- 20: Säule
- 21: Deckwand
- 22: Übergangswand
- 23: Halbsäule

## Patentansprüche

1. Anzuchtbehälter aus Kunststoff mit einer Boden- und einer Umfangswand sowie mit mehreren Aufnahmeräumen für Pflanzzwiebeln, wobei jeder Aufnahmeraum von vier auf einem Viereck angeordneten Stützelementen begrenzt wird, die sich von der Bodenwand nach oben erstrecken, **dadurch gekennzeichnet,**
**daß** die Stützelemente (10) zur Ausbildung eines sich nach oben erweiternden Aufnahmeraums (7) geneigt angeordnet sind.

2. Anzuchtbehälter nach Anspruch 1, **dadurch gekennzeichnet, daß** die Stützelemente (10) benachbarter Aufnahmeräume (7) jeweils über Verbindungswände (14) miteinander verbunden sind.

3. Anzuchtbehälter nach einem der Ansprüche 1 oder 2, **dadurch gekennzeichnet, daß** die Verbindungswand (14) konkav gewölbt ist.

4. Anzuchtbehälter nach einem der Ansprüche 1 bis 3, **dadurch gekennzeichnet, daß** die Stützelemente (10) mindestens eine Auflageschulter (13) aufweisen.

5. Anzuchtbehälter nach Anspruch 4, **dadurch gekennzeichnet, daß** die Auflageschulter (13) in der oberen Hälfte des Stützelementes (10) angeordnet ist.

6. Anzuchtbehälter nach einem der Ansprüche 4 oder 5, **dadurch gekennzeichnet, daß** die Neigung des sich oberhalb der Auflageschulter (13) befindlichen oberen Stützelementabschnitts (12) kleiner gleich der Neigung des unterhalb der Auflageschulter (13) befindlichen unteren Stützelementabschnittes (11) ist.

7. Anzuchtbehälter nach Anspruch 6, **dadurch gekennzeichnet, daß** der obere Stützelementabschnitt (12) senkrecht angeordnet ist.

8. Anzuchtbehälter nach einem der Ansprüche 1 bis 7, **dadurch gekennzeichnet, daß** jeweils hier im Innern des Behälters (1) angeordnete Stützelemente (10) zusammen mit den Verbindungswänden (14) eine Säule (20) bilden.

9. Anzuchtbehälter nach Anspruch 8, **dadurch gekennzeichnet, daß** die Säule (20) eine Deckwand (21) aufweist.

10. Anzuchtbehälter nach Anspruch 9, **dadurch gekennzeichnet, daß** die Deckwand (21) über eine schräg angeordnete Übergangswand (22) in die Verbindungswand (14) übergeht.

11. Anzuchtbehälter nach einem der Ansprüche 8 bis 10, **dadurch gekennzeichnet, daß** mindestens die durch Säulen (20) begrenzten Aufnahmeräume (7) eine in die Bodenwand (3) eingeformte napfförmige Vertiefung (15) aufweisen.

12. Anzuchtbehälter nach einem der Ansprüche 8 bis 11, **dadurch gekennzeichnet, daß** die Höhe der Säulen 75 bis 100 % der Höhe der Umfangswand (2) beträgt.

13. Anzuchtbehälter nach einem der Ansprüche 1 bis 12, **dadurch gekennzeichnet, daß** der Behälter (1) aus tiefgezogener Kunststofffolie besteht.
